# EUROPÄISCHE PATENTANMELDUNG

(11) **EP 3 357 344 A1**
(43) Veröffentlichungstag der Anmeldung: **08.08.2018**
(21) Anmeldenummer: 18155225.8
(22) Anmeldetag: 06.02.2018
(51) Int. Cl.: A23G 1/30, A23G 3/34, A23L 5/40

(54) **DEKORELEMENTE FÜR LEBENSMITTEL**

(30) Priorität: 07.02.2017 DE 102017001108
(71) Anmelder: Merck Patent GmbH, 64293 Darmstadt (DE)
(72) Erfinder: Schweinfurth, Ralf, 64287 Darmstadt (DE)

(57) **Zusammenfassung**

Die vorliegende Erfindung betrifft, Dekorelemente, vorzugsweise gefärbte, dreidimensionale Dekorelemente, für Lebensmittel sowie Verfahren zu deren Herstellung.

## Beschreibung

Die vorliegende Erfindung betrifft, Dekorelemente, vorzugsweise gefärbte, dreidimensionale Dekorelemente, für Lebensmittel sowie Verfahren zu deren Herstellung.

Dekorationen werden auf die Oberfläche von Lebensmitteln, z.B. Kuchen, platziert, um einen speziellen Anlass anzuzeigen, zum Beispiel eine Dekoration in der Form einer Stechpalme oder eines Weihnachtsbaums als Zeichen für Weihnachten oder Blumen, Kerzen, Zahlen als Zeichen für einen Geburtstag.

Üblicherweise werden solche Dekorationen aus Kunststoff, Papier oder Gips hergestellt und müssen entfernt werden, bevor das Lebensmittel verzehrt wird.

Es ist bekannt, dass solche Imitationsdekorationen durch essbare Dekorationen aus Marzipan ersetzt werden können. Allerdings sind Marzipan-Dekorationen von Hand gemacht und als solche teuer in der Herstellung. Darüber hinaus enthält Marzipan Nüsse, die bei allergisch veranlagten Verbrauchern Gesundheitsprobleme verursachen können.

Um diese Probleme auszuschließen, wurden Dekorationen aus Zuckerpaste hergestellt. Ein herkömmliches Rezept für Zuckerpaste umfasst zum Beispiel: Puderzucker (80 Gew.-%), Wasser (6,5 Gew.-%), Glucose (5,5 Gew.-%), Erdnusskernöl (5,5 Gew.-%), Gelatine (2 Gew.-%), Hyfoama (0,5 Gew.-%).

Die herkömmliche Zuckerpaste ist schwierig zu einer erforderlichen Gestalt zu formen, nicht nur aufgrund ihrer Konsistenz, sondern weil die Paste während der Verarbeitung trocknet, was zu Rissen in der Dekoration führt. Weil darüber hinaus die Dicke der Paste über das Profil der Dekorationen hinweg variiert, trocknen unterschiedliche Bereiche der Paste mit unterschiedlichen Geschwindigkeiten, wodurch das Auftreten von Rissen weiter zunimmt. Ferner können die Dekorationen nicht so leicht eine erforderliche Gestalt beibehalten. Wenn darüber hinaus die Dekoration z.B. auf einen frisch glasierten (übergossenen) Kuchen aufgebracht wird, zieht der Zucker in der Dekoration weiteres Wasser in die Struktur der Dekoration aus dem feuchten Zuckerguss. Die Rissbildung in der Dekoration, wenn diese trocknet, führt zu einer Verringerung deren Haltbarkeit.

Es ist auch schwierig, der Dekoration eine Färbung zu geben, weil Lebensmittelfarbstoffe auf Wasserbasis in die Struktur adsorbiert werden, was in der Folge zu einer Auflösung von deren Gestalt und dadurch zu einer ungleichmäßigen Färbung und Musterbildung auf der Oberfläche der Dekoration führt. Aus diesem Grund wird die Zuckerpastendekoration in einer trockenen Atmosphäre bei einer Temperatur von 50 - 60 °C hergestellt, um das Eindringen von zusätzlicher Feuchtigkeit in deren Struktur zu verhindern.

Aufgrund der zuvor genannten Nachteile ist die Verwendung herkömmlicher Zuckerpaste auf die Bildung eindimensionaler Objekte von einfacher Gestalt beschränkt, bei der es sich z.B. um flache Platten handelt. Außerdem fehlt es der Zuckerpaste selbst in einer eindimensionalen Form an Flexibilität. Nachdem sie getrocknet ist, kann sie nicht auf unebene Oberflächen aufgebracht werden und daran haften bleiben. Aus diesem Grund kann sie nicht um die Ecken eines Kuchens gebogen werden, ohne zu brechen. Zuckerpaste wird üblicherweise auch durch Gelatine steif gemacht, womit sie für Vegetarier und Veganer ungeeignet wird.

Die GB 2 271 920 A1 beschreibt eine Trockenpulvermischung zum Mischen mit Wasser auf einer eingefetteten Oberfläche zur Bildung einer knetbaren Zuckerpaste, um sie zu Kuchendekorationen zu formen. Die Mischung enthält ungefähr 3 % eines Weichmachers, welcher ein essbares Gummi einschließt.

Die US 4,037,000 und EP 1 060 672 A2 offenbaren Zuckergussmassen, welche Feuchthaltemittel, wie z.B. Xanthangummi, enthalten und zur Herstellung von dreidimensional ausgestalteten und essbaren Dekorationen für Lebensmittel geeignet sind.

Es ist zum einen ein Ziel der vorliegenden Erfindung, die oben beschriebenen Nachteile zu überwinden und zum anderen, eine Masse zur Herstellung von essbaren, vorzugsweise dreidimensionalen ("3-D"), Dekorelementen für Lebensmittel zur Verfügung zu stellen, welche universell einsetzbar, d.h. nicht nur zur Verzierung von Süßwaren, wie z.B. Kuchen, geeignet ist. Darüber hinaus soll ein Verfahren zur Herstellung von essbaren, dreidimensionalen Dekorelementen unter Verwendung der vorerwähnten Masse bereitgestellt werden.

Überraschenderweise wurde gefunden, dass sich eine Grundmasse aus Wasser (optional Ethanol enthaltend), Stabilisator (S), Feuchteregulator (F), Emulgator (E) und optional Konservierungsstoff (K) zur Herstellung von essbaren, 3-D Dekorelementen für Lebensmittel eignet. Die Grundmasse enthält gegebenenfalls weitere Komponenten, wie z.B. Farbstoffe und/oder Pigmente.

Durch die Anwesenheit von Ethanol kann die Trocknungsgeschwindigkeit der Grundmasse erhöht werden. Dadurch kann es zu einer Verringerung der Elastizität der Grundmasse kommen. Beim Einsatz von Ethanol kann, je nach eingesetzter Ethanolmenge, auf eine Zugabe von Konservierungsstoffen verzichtet werden. Vorzugsweise werden 1 - 20 Gew.-% des Wassers durch Ethanol ersetzt.

Zur Färbung eignen sich alle dem Fachmann bekannten Farbmittel, insbesondere zugelassene Lebensmittelfarbstoffe bzw. -pigmente wie z.B. natürliche Farbstoffe, mineralische Farbstoffe, verlackte Farbstoffe, wie z.B. FD&C Blue #1 Lake, FD&C Blue #2 Lake, FD&C Green #3 Lake, FD&C Yellow #5 Lake, FD&C Yellow #6 Lake, künstliche Farbstoffe, färbende Frucht- und Pflanzenextrakte, wie z.B. E131, E132, E129, E120, E110, E122, E124, E127, E171, E153, E172, E141, E106, E101, E100, E102, E104, E160, E162, E163, organische und anorganische Pigmente, Effektpigmente basierend auf plättchenförmigen Substraten, insbesondere Perlglanzpigmente und Interferenzpigmente.

Bevorzugte Effektpigmente sind Perlglanzpigmente und Interferenzpigmente basierend auf plättchenförmigen Substraten, die mit ein oder mehreren Metalloxiden und/oder Metallhydroxiden beschichtet sind.

Unter dem Begriff plättchenförmige Substrate sind alle dem Fachmann bekannten plättchenförmigen Substrate zu verstehen. Geeignete Basissubstrate für die Effektpigmente, wie z.B. Perlglanzpigmente und Interferenzpigmente, sind transparente oder semitransparente plättchenförmige Substrate. Insbesondere geeignet sind Schichtsilikate, Talkum, Kaolin, plättchenförmige Eisen- oder Aluminiumoxide, Glas-, SiO₂-, TiO₂-Plättchen, plättchenförmige Mischoxide, wie z. B. FeTiO₃, Fe₂TiO₅, oder andere vergleichbare Materialien, abhängig von der jeweiligen gesetzlichen Zulässigkeit für die Verwendung bei Lebensmitteln bzw. pharmazeutischen Produkten.

Die Größe der Basissubstrate ist an sich nicht kritisch und kann auf den jeweiligen Anwendungszweck abgestimmt werden. In der Regel haben die plättchenförmigen Substrate eine Dicke von 0,005 bis 10 µm, insbesondere von 0,05 und 5 µm. Die Ausdehnung in den beiden anderen Bereichen beträgt üblicherweise 1 bis 500 µm, vorzugsweise 2 bis 200 µm, und insbesondere 5 bis 150 µm. Ganz besonders bevorzugte Perlglanzpigmente weisen Partikelgrößen von 10-60 µm oder 5-25 µm oder 10-150 µm oder 5-50 µm auf.

Bevorzugte Effektpigmente, wie z.B. Perlglanzpigmente, basieren auf natürlichen Glimmerplättchen, synthetischen Glimmerplättchen, SiO₂-Plättchen, Al₂O₃-Plättchen, TiO₂-Plättchen, Glasplättchen, Fe₂O₃-Plättchen, insbesondere synthetischen Glimmerplättchen, natürlichen Glimmerplättchen und SiO₂-Plättchen (Nr. E555 bzw. E551 in der Liste der in der Europäischen Union zugelassenen Lebensmittelzusatzstoffe). Die synthetischen Plättchen, wie z.B. synthetische Glimmerplättchen, SiO₂-Plättchen, Al₂O₃-Plättchen, TiO₂-Plättchen, Glasplättchen, können dotiert oder undotiert sein. Geeignete Dotiermittel sind u.a. Metalloxide, wie z.B. TiO₂, ZrO₂, SnO₂.

Als Perlglanzpigmente werden Pigmente auf der Basis plättchenförmiger, transparenter oder semitransparenter Substrate aus z.B. Schichtsilikaten, wie etwa Glimmer, synthetischem Glimmer, Talkum, Sericit, Kaolin, aus Glas oder anderen silikatischen Materialien verwendet, die mit farbigen oder farblosen Metalloxiden wie z.B. TiO₂, Titansuboxide, Titanoxinitride, Fe₂O₃, Fe₃O₄, SnO₂, ZnO und anderen Metalloxiden allein oder in Mischung in einer einheitlichen Schicht oder in aufeinanderfolgenden Schichten beschichtet sind. Besonders bevorzugte Perlglanzpigmente basierend auf synthetischen oder natürlichen Glimmerplättchen, sind mit ein oder mehreren Metalloxiden aus der Gruppe TiO₂, Fe₂O₃ oder Fe₃O₄ oder deren Gemische beschichtet oder weisen eine Multilayer-Beschichtung auf bestehend aus alternierend hoch- und niedrigbrechenden Schichten, wie z.B. TiO₂ - SiO₂ - TiO₂.

Weiterhin bevorzugt sind mit TiO₂ und/oder Fe₂O₃ beschichtete SiO₂- oder Al₂O₃-Plättchen. Die Beschichtung der SiO₂-Plättchen mit ein oder mehreren Metalloxiden kann z.B. erfolgen wie in der WO 93/08237 (naßchemische Beschichtung) oder DE-OS 196 14 637 (CVD-Verfahren) besch rieben.

Auch bei den auf die plättchenförmigen Substrate aufgebrachten Metalloxiden handelt es sich vorzugsweise um für den Menschen verzehrbare Materialien in Lebensmittelqualität (Nr. E 171 (TiO₂) bzw. E 172 (Eisenoxid) in der Liste der in der Europäischen Union zugelassenen Lebensmittelzusatzstoffe).

Weiterhin sind bevorzugt Perlglanzpigmentgemische, die unterschiedliche Partikelgrößen aufweisen. Besondere Effekte können erzielt werden, wenn Perlglanzpigmente mit "kleinen" Partikelgrößen wie z.B. 5-25 µm oder 10-60 µm mit Perlglanzpigmenten mit "großen" Partikelgrößen, wie z.B. 10-150 µm, gemischt werden.

Die Dicke der einzelnen Schichten, vorzugsweise ein oder mehrere Metalloxidschichten, auf dem Basissubstrat beträgt vorzugsweise 10 - 500 nm, insbesondere 20-400 nm und ganz besonders bevorzugt 30 - 350 nm.

Bei Mehrschichtpigmenten, die auf der Substratoberfläche vorzugsweise alternierend hoch- und niedrigbrechende Schichten (A)(B)(A) aufweisen, besitzt die hochbrechende Schicht (Schicht A) in der Regel Schichtdicken von 10 - 500 nm, vorzugsweis 20 - 400 nm und insbesondere 30 - 350 nm. Die Dicke der niedrigbrechenden Schicht (Schicht B) beträgt vorzugsweise 10-500 nm, vorzugsweise 20 - 400 nm, insbesondere 30 - 350 nm.

Unter hochbrechenden Schichten sind in dieser Anmeldung Schichten mit einem Brechungsindex von ≥ 1,8 zu verstehen, wie z.B. TiO₂, Fe₂O₃, Fe₃O₄, während niedrigbrechende Schichten einen Brechungsindex von < 1,8 aufweisen, wie z.B. SiO₂, Al₂O₃. AlO(OH).

Die Effektpigmente, vorzugsweise Perlglanzpigmente, können mehrere, gleiche oder verschiedene Kombinationen an Schichtpaketen enthalten, bevorzugt ist aber die Belegung des Substrats bei Mehrschichtpigmenten mit nur einem Schichtpaket (A) (B) (A). Zur Intensivierung der Farbstärke kann das erfindungsgemäße Pigment bis zu 4 Schichtpakete enthalten, wobei die Dicke aller Schichten auf dem Substrat 3 µm allerdings nicht überschreiten sollte. Vorzugsweise wird bei Mehrschichtpigmenten mit 3 oder mehr Schichten auf der Substratoberfläche eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (A). Als hochbrechende Schicht kommen vorzugsweise TiO₂, Fe₂O₃ und/oder Fe₃O₄ oder ein Gemisch aus Titanoxid und Eisenoxid in Frage. Das TiO₂ kann dabei in der Rutil- oder in der Anatasmodifikation vorliegen.

Als farblose niedrigbrechende für die Beschichtung (B) geeignete Materialien sind vorzugsweise Metalloxide bzw. die entsprechenden Oxidhydrate, wie z. B. SiO₂, Al₂O₃, AlO(OH), B₂O₃, MgF₂, MgSiO₃ oder ein Gemisch der genannten Metalloxide, geeignet entsprechend der gesetzlichen Zulassungen zur Verwendung bei Lebensmitteln.

Bei den besonders bevorzugten Perlglanzpigmenten für den Lebensmittelbreich handelt es sich um Glimmer-Plättchen (synthetisch oder natürlich) oder SiO₂-Plättchen, die mit einer Metalloxidschicht (TiO₂ oder Fe₂O₃ oder Fe₃O₄) der Dicke von 10 nm bis 500 nm umhüllt sind. Die Dicken der Plättchen liegen im Bereich von 200 nm bis 900 nm. Derartige Pigmente zeichnen sich je nach Dicke der eingesetzten Plättchen und der aufgebrachten Metalloxidschichten sowie nach Art des Metalloxids durch besonders intensive Interferenzfarben und/oder durch starke winkelabhängige Farbwechseleffekte aus. Letztere zeigen sich dabei so, dass ein Betrachter beim Wechsel seiner Beobachtungsposition zum pigmentierten Objekt unterschiedliche Farben wahrnimmt.

Bevorzugte Effektpigmente sind insbesondere ausgewählt aus den nachfolgend genannten Pigmenten:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch.

Die Farbstoffe, organischen Pigmente, anorganischen Pigmente und/oder Effektpigmente werden in einer Gesamtmenge von 2 - 15 Gew.-%, bevorzugt 5 - 10 Gew.-%, bezogen auf die Gesamtmasse der eingefärbten Grundmasse, eingesetzt.

Die Grundmasse enthält neben Wasser (und optional Ethanol) einen Stabilisator (S), der z.B. dazu dient, in der Mischung enthaltenes Pigment in Suspension zu halten, das heißt, dessen Sedimentation zu verhindern.

Stabilisatoren sind in einer großen Vielfalt bekannt und werden als solche angewandt. Eine Gruppe möglicher Stabilisatoren umfasst eine Kombination von kolloidaler mikrokristalliner Cellulose (MCC) sowie Carboxymethylcellulose (CMC). Als Stabilisatoren einsetzbar sind insbesondere die folgenden der Liste der in der Europäischen Union zugelassenen Lebensmittelzusatzstoffe: E 322, E 401, E402, E403, E404, E 405, E 406, E 407, E 410, E 412, E 413, E 414, E 415, E 416, E 417, E 418, E 422, E 423, E 425, E 426, E 440, E 460, E461, E 462, E 463, E464, E 463, E 465, E 466, E 468, E 1203, E1204, E 1205, E 1206, E 1207, E 1404, E 1410, E 1412, E 1413, E 14014, E 1420, E 1422, E 1440, E 1442, E 1450 E 1451, E 1452. Erfindungsgemäß bevorzugt wird E 466 (Natrium-Carboxymethylcellulose).

Der Stabilisator (S) wird in einer Menge von 1 - 5 Gew.-%, bevorzugt 1,5 - 4 Gew.-%, besonders bevorzugt 1,8 - 3 Gew.-%, bezogen auf die Gesamtmasse der Grundmasse, eingesetzt.

Bei Änderung der Stabilisator-Menge werden Viskosität und Stabilität der Grundmasse beeinflusst.

Weiterhin enthält die Grundmasse einen Feuchteregulator (F), der ein schnelles und gleichmäßiges Antrocknen und Abtrocknen der dreidimensionalen Dekorelemente bewirkt.

Feuchteregulatoren sind in einer großen Vielfalt bekannt und werden als solche angewandt. Als Feuchteregulatoren einsetzbar sind u.a. die folgenden der Liste der in der Europäischen Union zugelassenen Lebensmittelzusatzstoffe: E 325, E 420, E 421, E 422, E 964, E 965, E 966, E 968, E 1200, E 1520, E 1521. Erfindungsgemäß bevorzugt wird E 1520 (1,2-Propandiol).

Der Feuchteregulator wird in einer Menge von 1,5 - 12 Gew.-%, bevorzugt 2 - 10 Gew.-%, besonders bevorzugt 5 - 8 Gew.-%, bezogen auf die Gesamtmasse der Grundmasse, eingesetzt.

Eine Verringerung der Menge an Feuchteregulator kann sich zum Nachteil der Flexibilität der hergestellten dreidimensionalen Dekorelemente auswirken.

Weiterhin enthält das Auftragsmedium einen Emulgator (E), der für homogene Mischung der in der Grundmasse präsenten Komponenten sorgt.

Emulgatoren sind in einer großen Vielfalt bekannt und werden als solche angewandt. Als Emulgatoren einsetzbar sind u.a. die folgenden der Liste der in der Europäischen Union zugelassenen Lebensmittelzusatzstoffe: E 322, E 405, E 426, E 432, E 442, E 444, E 459, E 470a, E 471, E 472b, E 472e, E 473, E 476, E 481, E 483, E 491, E 920. Erfindungsgemäß bevorzugt wird E 322 (Soja- und/oder Sonnenblumen-Lecithin).

Der Emulgator (E) wird in einer Menge von 0,25 - 4 Gew.-%, bevorzugt 0,5 - 2 Gew.-%, besonders bevorzugt 0,5 - 1 Gew.-%, bezogen auf die Gesamtmasse der Grundmasse, eingesetzt.

Weiterhin kann die Grundmasse einen Konservierungsstoff (K) enthalten, der für deren mikrobiologische Stabilität sorgt.

Konservierungsstoffe sind in einer großen Vielfalt bekannt und werden als solche angewandt. Als Konservierungsstoff einsetzbar sind u.a. die folgenden der Liste der in der Europäischen Union zugelassenen Lebensmittelzusatzstoffe: E 200, E 202, E 203, E 210, E 211, E 212, E 213, E 214, E 215, E218, E 219, E 280, E 281, E 282, E 283, E 284, E 285. Erfindungsgemäß bevorzugt werden als Konservierungsstoff Kombinationen von E 202 mit Lebensmittelsäuren wie z.B. E 330, E 270 oder anderen Lebensmittelsäuren.

Das Konservierungsstoff-Gemisch aus Konservierungsstoff und Lebensmittelsäure wird in einer Menge von 0,0 - 1,5 Gew.-%, bevorzugt 0,2 - 1 Gew.-%, besonders bevorzugt 0,3 - 0,7 Gew.-%, bezogen auf die Gesamtmasse der Grundmasse, eingesetzt. Das Konservierungsstoff-Gemisch besteht typischerweise zu 75 - 95 Gew.-% aus Lebensmittelsäure und zu 5 - 25 Gew.-% aus dem eigentlichen Konservierungsstoff.

Optional können der Grundmasse weitere Komponenten (W), wie z.B. zur geschmacklichen Abrundung künstliche oder natürliche Lebensmittelaromen und/oder Süßstoffe/Süßungsmittel, wie z.B. Acesulfam K oder Saccharin, oder auch Puffersalze und/oder andere Farbstoffe zugegeben werden.

In einer weiteren Ausführungsform der Erfindung kann die Grundmasse weiter mit Wasser verdünnt werden, bzw. bereits in der Grundrezeptur ein Teil des Wassers durch Ethanol ersetzt werden. Durch letztere Verfahrensweise wird die Trocknungszeit der Grundmasse verkürzt und deren mikrobiologische Stabilität erhöht.

Zur Herstellung der Grundmasse können herkömmliche Mischverfahren und Rührer, typischerweise unter Verwendung eines offenen Gefäßes eingesetzt werden. In das mit Wasser beschickte Gefäß werden vorzugsweise die Komponenten S, F, E und gegebenenfalls K und W der Grundmasse in einer vom Hersteller der jeweiligen Komponente angegebenen Reihenfolge eingegeben und anschließend durch Rühren vermischt. Optional kann der Mischprozess durch Erwärmen beschleunigt werden.

Im Falle der Anwesenheit eines Konservierungsstoff-Gemischs wird die Grundmasse vorteilhaft dadurch hergestellt, dass man zunächst eine Mischung des Konservierungsstoff-Gemischs und gegebenenfalls weiterer Komponenten W in Wasser (und ggf. Ethanol) herstellt ("Mischung A"). Die Komponenten F, E und S werden separat vermischt ("Mischung B"). Hiernach wird Mischung B unter starkem Rühren zu Mischung A hinzugegeben und zur fertigen Grundmasse vermischt.

Falls nicht bereits in Mischung A eingerührt, werden der fertigen Grundmasse im Anschluss ein oder mehrere Lebensmittelfarbstoffe bzw. -pigmente und/oder optionale Aromen und/oder Süßstoffe zugegeben.

Siliziumdioxid (E551) kann in kleinen Mengen zusätzlich als Füllstoff zur besseren Stabilisierung der Rezeptur hinzugefügt werden.

Die fertige, eingefärbte Grundmasse hat eine pastöse Konsistenz.

Die Herstellung der 3D-Dekorelemente erfolgt, indem die ggf. eingefärbte Grundmasse in geeignete Formen gefüllt wird. Hierzu eignen sich z.B. Kunststoff- oder Metallformen, wie sie auch zur Herstellung von Schokoladepralinen oder Schoko-Figuren, Marzipanfiguren, etc., verwendet werden. Silikonformen sind aufgrund ihrer schlechteren Wärmeleitung weniger geeignet. Im Anschluss werden die befüllten Formen getrocknet, in der Regel bei Temperaturen von 20 - 45 °C, vorzugsweise über mehrere Stunden, d.h. bis zu 24 h.

Nach beendeter Trocknung kann man die fertigen 3D-Formen leicht mit der Hand entnehmen bzw. sie fallen von selbst aus den Formen. Die so hergestellten Formen können beispielsweise auf fertige Schokoladeprodukte, Eiskrem, Pralinen, feine Backwaren, Fertigdesserts, fertige Mahlzeiten, etc., zur Verzierung aufgebracht werden. Weiterhin können die fertigen 3D-Formen auch direkt mit Schokolade aufgefüllt werden. Dies kann sogar auch in der 3D-Form selbst geschehen. Die 3D-Dekorform schmiegt sich nach der Trocknung perfekt an die Lebensmitteloberfläche an und es resultiert eine extrem glatte Oberfläche und sehr detailtreue Wiedergabe des Motivs der NegativForm.

Gegenstand der vorliegenden Erfindung ist auch ein Verfahren zur Herstellung der Grundmasse und zur Herstellung der 3D-Elemente aus der Grundmasse.

Zusätzlich zu den dreidimensionalen Formen könne auch flächige, folienartige Dekorationen hergestellt werden. Diese lassen sich im Anschluß in kleinere Partikel zerteilen. Die 3D-Masse wird hierbei plan auf einer Fläche ausgestrichen und getrocknet und im Anschluss geschnitten oder kundenspezifisch zerkleinert.

Weiterhin ist die 3D-Masse auch zur direkten, farbigen Verzierung von z.B. Schokoladeoberflächen verwendbar. Sie lässt sich sehr genau dosieren und schmiegt sich nach der Trocknung perfekt und detailgetreu an die Produktoberfläche an.

Als Besonderheit kann die 3D-Masse auch z.B. als farbige Zwischenschicht bei z.B. Schokoladeprodukten verwendet werden. Hierbei wird zuerst die erste Schokoschicht in die Form gegossen. Nach dem Erkalten wird die 3D-Masse aufgetragen und getrocknet. Im Anschluss wird die zweite Schokoschicht auf die getrocknete, farbige Zwischenschicht hinzu gegeben.

Die eingefärbte Grundmasse kann alternativ auch über Plastik- oder Metallflächen mittels eines Messers bzw. Spachtels etc. ausgestrichen werden. Nach anschließender Trocknung erhält man eine dünne Schicht, welche man entweder wie eine Folie zum Verzieren von Lebensmitteln verwenden kann oder, in kleine Stücke oder Formen zerteilt, als Flocken bzw. Dekore auf Lebensmitteln aller Art zur Verzierung aufbringen kann. Dies stellt eine kostengünstige Alternative zu Gold- oder Silberflocken dar, welche hier in der Regel Verwendung finden. Silberfolien werden z.B. in Asien oftmals zur Verzierung verwendet. Auch hier ist mit den aus der Masse hergestellten Folien nun eine preislich interessante Alternative möglich.

Die nachfolgenden Beispiele sollen die Erfindung erläutern, ohne sie jedoch zu begrenzen. Sofern nicht anders angegeben sind alle Prozentangaben Gewichtsprozent.

### Beispiele:

### Beispiel 1: Grundmasse für 3D-Formen

| | | | |
|---|---|---|---|
| 88,25 | Gew.-% Wasser | | (A) |
| 0,05 | Gew.-% Kaliumsorbat | (Merck KGaA) | (A) |
| 0,5 | Gew.% Zitronensäure (kristallin) | (Merck KGaA) | (A) |
| | | | |
| 2,4 | Gew.-% Carboxymethylcellulose | (Roeper GmbH) | (B) |
| 7 | Gew.-% 1,2-Propandiol | (Merck KGaA) | (B) |
| 0,75 | Gew.-% Sonnenblumenlecithin | (SternChemie GmbH & Co. KG) | (B) |

Aroma (nach Bedarf)
Süßstoff (nach Bedarf)
Puffersalze zur pH-Einstellung (nach Bedarf)
Zugabe Aroma, Süßstoff, Puffersalze bis 100%, Ausgleich über Erhöhung bzw. Reduktion der Wasserzugabe

Alle Inhaltsstoffe (A) werden unter Rühren gemischt. Danach mischt man die Inhaltsstoffe (B) und fügt diese unter starkem Rühren zu A hinzu und rührt nach 15 - 30 min nach. Aufgrund der hierbei schnell eintretenden Viskositätszunahme muss die Geschwindigkeit des Rührers angepasst werden, um eine gute Vermischung zu gewährleisten.
Aromen und Süßstoffe können auch nach dem Mischen von (A) und (B) hinzugegeben werden. Im Anschluss wird mit Zitronensäure oder Puffersalzen der pH-Wert bei ca. 3,5 eingestellt. In diese Grundmasse werden nun Lebensmittelfarbstoffe, Perlglanzpigmente (Lebensmittelqualität) einzeln oder in Kombination eingerührt.

### Beispiel 2: Eingefärbte Grundmassen für 3-D-Formen

### Beispiel 2.1

| | | |
|---|---|---|
| 90 | Gew.-% Grundmasse nach Beispiel 1 | |
| 10 | Gew.-% Candurin® Gold Lustre | (Merck KGaA) |

### Beispiel 2.2

| | | |
|---|---|---|
| 89,7 | Gew.-% Grundmasse nach Beispiel 1 | |
| 10 | Gew.-% Candurin® Silver Lustre | (Merck KGaA) |
| 0,3 | Gew.-% Pflanzenkohle E153 | (Roha Europe S.L.U.) |

### Beispiel 2.3

| | | |
|---|---|---|
| 89 | Gew.-% Grundmasse nach Beispiel 1 | |
| 10 | Gew.-% Candurin® Silver Lustre | (Merck KGaA) |
| 1 | Gew.-% rote Beete Konzentrat E160 | (Chr. Hansen A/S) |

### Beispiel 2.4

| | | |
|---|---|---|
| 88,96 | Gew.-% Grundmasse nach Beispiel 1 | |
| 10 | Gew.-% Candurin® Silver Lustre | (Merck KGaA) |
| 0,04 | Gew.-% E124 | (Roha Europe S.L.U.) |

### Beispiel 2.5

| | | |
|---|---|---|
| 91,94 | Gew.-% Grundmasse nach Beispiel 1 | |
| 8 | Gew.-% Candurin® Gold Sparkle | (Merck KGaA) |
| 0,06 | Gew.-% E120 | (Fiorio Colori SpA) |

### Beispiel 2.6

| | | |
|---|---|---|
| 91 | Gew.-% Grundmasse nach Beispiel 1 | |
| 9 | Gew.-% Candurin® NXT Ruby Red | (Merck KGaA) |

### Beispiel 2.7

| | | |
|---|---|---|
| 90 | Gew.-% Grundmasse nach Beispiel 1 | |
| 7 | Gew.-% Candurin® Gold Sparkle | (Merck KGaA) |
| 3 | Gew.-% Candurin® Gold Lustre | (Merck KGaA) |

### Beispiel 2.8

| | | |
|---|---|---|
| 91 | Gew.-% Grundmasse nach Beispiel 1 | |
| 8 | Gew.-% Candurin® Silver Lustre | (Merck KGaA) |
| 1 | Gew.-% E171 | (Merck KGaA) |

### Beispiel 2.9

| | | |
|---|---|---|
| 92 | Gew.-% Grundmasse nach Beispiel 1 | |
| 7 | Gew.-% Candurin® Gold Lustre | (Merck KGaA) |
| 1 | Gew.-% Rot-färbender Pflanzenextrakt | (Rudolf Wild GmbH & Co. KG) |

### Beispiel 2.10

| | | |
|---|---|---|
| 89,5 | Gew.-% Grundmasse nach Beispiel 1 | |
| 10 | Gew.-% Candurin® Blue Shimmer | (Merck KGaA) |
| 0,5 | Gew.-% Pflanzenkohle E153 | (Roha Europe S.L.U.) |

### Beispiel 2.11

| | | |
|---|---|---|
| 94 | Gew.-% Grundmasse nach Beispiel 1 | |
| 6 | Gew.-% Candurin® Brown Amber | (Merck KGaA) |

### Beispiel 2.12

| | | |
|---|---|---|
| 99,7 | Gew.-% Grundmasse nach Beispiel 1 | |
| 0,3 | Gew.-% E110 | (Roha Europe S.L.U.) |

### Beispiel 2.13

| | | |
|---|---|---|
| 99,7 | Gew.-% Grundmasse nach Beispiel 1 | |
| 0,3 | Gew.-% E129 | (Roha Europe S.L.U.) |
| 0,2 | Gew.-% E131 | (Roha Europe S.L.U.) |

### Beispiel 2.14

| | | |
|---|---|---|
| 91 | Gew.-% Grundmasse nach Beispiel 1 | |
| 7 | Gew.-% Candurin® Silver Lustre | (Merck KGaA) |
| 2 | Gew.-% Candurin® Gold Lustre | (Merck KGaA) |

### Beispiel 2.15

| | | |
|---|---|---|
| 93 | Gew.-% Grundmasse nach Beispiel 1 | |
| 7 | Gew.-% Candurin® Silver Fine | (Merck KGaA) |

### Beispiel 2.16

| | | |
|---|---|---|
| 93 | Gew.-% Grundmasse nach Beispiel 1 | |
| 6 | Gew.-% Candurin® Silver Sparkle | (Merck KGaA) |
| 1 | Gew.-% Siliziumdioxid (Aerosil) | (Evonik Industries) |

Die eingefärbten Grundmassen der Beispiele 2.1 - 2.16 werden in Negativformen aus Metall, Plastik oder Silikon gefüllt und für 8 - 12 h bei 25 °C und dann für 10-14 h bei 40 °C entweder im Trockenschrank, klimatisiertem Trocknungsraum, oder Backofen getrocknet. Je nach einstellbarer Luftzirkulation bzw. Luftfeuchte kann die benötigte Trocknungszeit entsprechend reduziert werden. Eine zu hohe Temperatur am Beginn der Trocknung führt zu einer starken, wenig durchlässigen Filmbildung an der Oberfläche der Masse, wodurch das weitere Abtrocknen der darunter liegenden Masse stark verzögert bzw. ganz verhindert wird.

### Beispiel 3: Grundmasse für Folien bzw. Oberflächenverzierung:

**Beispiel 3.1**

| | | | |
|---|---|---|---|
| 10 | Gew.-% Ethanol (96%ig; "food grade") | (Merck KGaA) | (A) |
| 84,95 | Gew.-% Wasser | | (A) |
| 0,05 | Gew.-% Kaliumsorbat | Merck KGaA | (A) |
| Zitronensäure (nach Bedarf) | | Merck KGaA | (A) |
| | | | |
| 1,5 | Gew.-% Carboxymethylcellulose | Roeper GmbH | (B) |
| 3 | Gew.-% 1,2 Propandiol | Merck KGaA | (B) |
| 0,5 | Gew.-% Sonnenblumenlecithin | SternChemie | |
| | | GmbH & Co. KG | (B) |

Aroma (nach Bedarf)
Süßstoff (nach Bedarf)
Puffersalze zur pH-Einstellung (nach Bedarf)

### Zugabe Aroma, Süßstoff, Puffersalze bis 100 %, Ausgleich über Erhöhung bzw. Reduktion der Wasserzugabe

### Beispiel 3.2

Alternativrezeptur ohne Ethanolzugabe

| | | | |
|---|---|---|---|
| 94,55 | Gew.-% Wasser | | (A) |
| 0,05 | Gew.-% Kaliumsorbat | Merck KGaA | (A) |
| Zitronensäure (nach Bedarf) | | Merck KGaA | (A) |
| | | | |
| 1,8 | Gew.-% Carboxymethylcellulose | Roeper GmbH | (B) |
| 3 | Gew.-% 1,2 Propandiol | Merck KGaA | (B) |
| 0,5 | Gew.-% Sonnenblumenlecithin | SternChemie | |
| | | GmbH & Co. KG | (B) |

Aroma (nach Bedarf)
Süßstoff (nach Bedarf)
Puffersalze zur pH-Einstellung (nach Bedarf)

### Zugabe Aroma, Süßstoff, Puffersalze bis 100 %, Ausgleich über Erhöhung bzw. Reduktion der Wasserzugabe

Alle Inhaltsstoffe (A) werden unter Rühren gemischt. Danach mischt man die Inhaltsstoffe (B) und fügt diese unter starkem Rühren zu (A) hinzu.

Aromen und Süßstoffe können auch nach dem Mischen von (A) und (B) hinzugegeben werden. Im Anschluss wird mit Zitronensäure oder Puffersalzen der pH-Wert bei ca. 3,5 eingestellt.

In die Grundmasse werden nun Lebensmittelfarbstoffe, Perlglanzpigmente (Lebensmittelqualität) einzeln oder in Kombination eingerührt, wie im Beispiel 2 angegeben.

### Beispiel 3.3: Herstellung der 3D-Elemente

Die Herstellung der 3D-Elemente erfolgt indem die fertige Grundmasse (siehe Beispiel 3.2) in geeignete Formen gefüllt wird. Hierbei eignen sich z.B. Plastik- bzw. Metallformen, wie sie analog auch zur Herstellung von Schokoladepralinen oder -Schoko-Figuren, Marzipanfiguren, etc. verwendet werden. Silikonformen sind aufgrund ihrer schlechteren Wärmeleitung weniger geeignet. Die Menge an eingefüllter 3D-Masse hängt von der Viskosität und der gewünschten Höhe der 3D-Formen ab und kann individuell gewählt werden. Es ist allerdings zu beachten, dass mehr Füllmasse auch eine verlängerte Trocknungszeit nach sich zieht.

Im Anschluss werden die nun befüllten Formen getrocknet. Hierbei ist es wichtig, dass der Trocknungsprozess nicht zu schnell bei zu hohen Temperaturen stattfindet. D.h. dass gerade am Anfang der Trocknung keine zu hohen Trocknungstemperaturen gewählt werden. Hierbei würde die Oberfläche der Masse abtrocknen, so dass keine weitere Feuchtigkeit aus tieferen Schichten entzogen werden kann. So führt dies zu einer partiellen Abtrocknung einzelner Zonen der Grundmasse. Daraus resultieren Spannungen innerhalb der Masse, welche zu Verformungen und somit zu einer ungleichmäßigen Abtrocknung der Grundmasse in der Form führen. Unregelmäßige Oberflächenverformungen sind die Folge.

Ebenfalls können Lufteinschlüsse nicht mehr nach oben entweichen und führen zu Fehlstellen während der Trocknung. Geringe Luftfeuchtewerte unterstützen hierbei die Trocknung positiv.

Aus diesem Grund sollte die Trocknung langsam beginnen und bei einer niedrigen Temperatur - am besten über Nacht - mehrere Stunden hinweg erfolgen, z.B. bei Raumtemperatur 20 - 35°C, 24 h. Hat sich die Masse der Form schon nach dem ersten Trocknungsabschnitt (nach ca. 6 - 10h) weitestgehend der Form angepasst, so kann die abschließende Trocknung bei einer höheren Temperatur in einem Trocknungsschrank bzw. Trocknungsraum erfolgen. Hierbei haben sich Temperaturen von 30 bis 45°C bewährt.

Ist die Trocknung beendet, so kann man die fertigen 3D-Formen leicht mit der Hand entnehmen, bzw. sie fallen von selbst aus den Formen. Analog kann auch z.B. Schokolade in die Formen gefüllt werden. Nach dem Erkalten kann man die nun dekorierte Schokolade aus der Form entnehmen.

Je mehr Grundmasse eingefüllt wird, umso länger dauert die Trocknungszeit.

Die Trocknung unterteilt sich in eine längere, erste Phase bei (ca. Raumtemperatur -30 °C), und eine zweite kürzere Trocknungsphase bei höheren Temperaturen (ca. 30 - 40°C). Eine hohe Luftfeuchtigkeit wirkt sich verlängernd auf die Trocknungszeit aus, und sollte vorzugsweise vermieden werden.

Schokolade: die so hergestellten Formen können auf fertige Schokoladeprodukte zur Verzierung aufgebracht werden, oder aber auch mit Schokolade selbst befüllt werden. Dies kann sogar auch in der Form selbst geschehen.

### Beispiel 3.4 Weitere Verwendung der Grundmasse

### Beispiel 3.4.1: Folien und Flocken

Die fertig hergestellte Grundmasse aus Beispiel 3.2 kann alternativ auch eben über flache Plastik- oder Metallflächen mittels eines Messers bzw. Spachtels, etc. ausgestrichen werden. Nach anschließender Trocknung erhält man eine dünne Schicht, welche man entweder wie eine Folie selbst zum Verzieren der Lebensmittel verwenden kann, oder in kleine Stücke oder Formen zerteilt als kleine Flocken bzw. Dekore auf Lebensmitteln aller Art zur Verzierung aufbringen kann.

### Beispiel 3.4.2: Direkte Produkt-Verzierung

Die fertige Grundmasse aus Beispiel 3.2 kann z.B. bei Schokoladeprodukten auch direkt als solche zur Verzierung verwendet werden. Hierbei wird die 3D-Masse dünn auf die zu färbenden Stellen des Produktes aufgetragen. Nach entsprechender Trocknung (siehe 3.3.) erhält man verzierte Oberflächen, bei welchen die Masse sich genau der Struktur der Produkt-Oberfläche anpasst. Außer Schokolade können auch andere Lebensmittel, wie z.B. Kekse oder Kuchen, so einfach und effizient verziert werden. Die Trocknungszeit kann verringert werden, indem man z.B. Ethanol hinzugibt und/oder die Propandiol-Menge und/oder die Na-Carboxymethylcellulose-Menge verringert.

### Beispiel 3.4.3: Zier-Zwischenschichten

Es lassen sich auch Zierstreifen in Schokoladeprodukten erzeugen. Dies geschieht, indem man z.B. die Form zuerst mit etwas warmer Schokolade auffüllt, diese auskühlen lässt, und im Anschluss die Grundmasse in einer dünnen Schicht über die Schokolade gibt. Nach der obligatorischen Trocknungszeit kann die Form mit einer weiteren Schicht warmer Schokolade aufgefüllt werden. Man erhält somit nach dem Abkühlen der zweiten Schokoschicht eine Schokoladenfigur mit einem gefärbten Zwischen-Zierstreifen. Dieser ist sehr schön seitlich an der Schokofigur sichtbar.

Die in den Beispielen verwendeten Perlglanz- und Interferenzpigmente (Candurin®-Pigmente der Fa. Merck) basierend auf Glimmer- oder SiO₂-Plättchen besitzen folgende Zusammensetzung und Partikelgrößen:

| | |
|---|---|
| Candurin® Gold Lustre: | Glimmer (E555) beschichtet mit TiO₂ (E171) und Fe₂O₃ (E172ii); 10-60 µm |
| Candurin® Gold Sparkle: | Glimmer (E555) beschichtet mit TiO₂ (E171) und Fe₂O₃ (E172ii); 10-150 µm |
| Candurin® Brown Amber: | Glimmer (E555) beschichtet mit Fe₂O₃ (E172ii); 10-60 µm |
| Candurin® Blue Shimmer: | Glimmer (E555) beschichtet mit TiO₂ (E171); 10-60 µm |
| Candurin® Silver Lustre: | Glimmer (E555) beschichtet mit TiO₂ (E171); 10-60 µm |
| Candurin® Silver Sparkle: | Glimmer (E555) beschichtet mit TiO₂ (E171); 10-150 µm |
| Candurin® Silver Fine: | Glimmer (E555) beschichtet mit TiO₂ (E171); 1-15 µm |
| Candurin® NXT Ruby Red: | SiO₂-Plättchen (E551) beschichtet mit Fe₂O₃ (E172ii); 5-50 µm |

## Patentansprüche

1. Verwendung einer Zusammensetzung enthaltend Wasser, Stabilisator, Feuchteregulator und Emulgator zur Herstellung essbarer Dekorelemente für Lebensmittel.

2. Verwendung nach Anspruch 1, **dadurch gekennzeichnet, dass** es sich um dreidimensionale Dekorelemente handelt.

3. Verwendung nach Anspruch 1 oder 2, **dadurch gekennzeichnet, dass** die Zusammensetzung zusätzlich mindestens einen Konservierungsstoff und gegebenenfalls weitere Komponenten enthält.

4. Verwendung nach einem oder mehreren der Ansprüche 1 bis 3, **dadurch gekennzeichnet, dass** als Stabilisator kolloidale mikrokristalline Cellulose (MCC), bevorzugt Carboxymethylcellulose (CMC) und besonders bevorzugt Natrium-Carboxymethylcellulose eingesetzt wird.

5. Verwendung nach einem oder mehreren der Ansprüche 1 bis 4, **dadurch gekennzeichnet, dass** der Stabilisator in einer Menge von 1 - 5 Gew.-%, bevorzugt 1,5 - 4 Gew.-%, besonders bevorzugt 1.8 - 3,0 Gew.-%, bezogen auf die Gesamtmasse der Zusammensetzung, eingesetzt wird.

6. Verwendung nach einem oder mehreren der Ansprüche 1 bis 5, **dadurch gekennzeichnet, dass** 1,2-Propandiol als Feuchteregulator eingesetzt wird.

7. Verwendung nach einem oder mehreren der Ansprüche 1 bis 6, **dadurch gekennzeichnet, dass** der Feuchteregulator in einer Menge von 1,5 - 12 Gew.-%, bevorzugt 2,0 - 10 Gew.-%, besonders bevorzugt 5,0 - 8,0 Gew.-%, bezogen auf die Gesamtmasse der Zusammensetzung, eingesetzt wird.

8. Verwendung nach einem oder mehreren der Ansprüche 1 bis 7, **dadurch gekennzeichnet, dass** Soja- und/oder Sonnenblumen-Lecithin als Emulgator eingesetzt werden.

9. Verwendung nach einem oder mehreren der Ansprüche 1 bis 8, **dadurch gekennzeichnet, dass** der Emulgator in einer Menge von 0,25 - 4 Gew.-%, bevorzugt 0,5 - 2 Gew.-%, besonders bevorzugt 0,5 - 1,0 Gew.-%, bezogen auf die Gesamtmasse der Zusammensetzung, eingesetzt wird.

10. Verwendung nach einem oder mehreren der Ansprüche 1 bis 9, **dadurch gekennzeichnet, dass** der Konservierungsstoff ein Gemisch aus 5 - 25 Gew.-% eines Konservierungsstoff und 75 - 95 Gew.-% einer Lebensmittelsäure ist und das Gemisch in einer Menge von 0,0 - 1,5 Gew.-%, bevorzugt 0,2 - 1,0 Gew.-%, besonders bevorzugt 0,3 - 0,7 Gew.-%, bezogen auf die Gesamtmasse der Zusammensetzung, eingesetzt wird.

11. Verwendung nach einem oder mehreren der Ansprüche 1 bis 10, **dadurch gekennzeichnet, dass** die Zusammensetzung zusätzlich mindestens ein Farbmittel enthält.

12. Verwendung nach einem oder mehreren der Ansprüche 1 bis 11, **dadurch gekennzeichnet, dass** die Zusammensetzung mindestens ein Farbmittel ausgewählt aus der Gruppe natürliche Farbstoffe, mineralische Farbstoffe, verlackte Farbstoffe, künstliche Farbstoffe, färbende Frucht- und Pflanzenextrakte, organische und anorganische Pigmente, Effektpigmente basierend auf plättchenförmigen Substraten enthält.

13. Verwendung nach einem oder mehreren der Ansprüche 1 bis 12, **dadurch gekennzeichnet, dass** das Effektpigment ein Perlglanzpigment oder ein Interferenzpigment ist.

14. Verwendung nach einem oder mehreren der Ansprüche 1 bis 13, **dadurch gekennzeichnet, dass** die Zusammensetzung Farbmittel in einer Menge von 2 - 15 Gew.-% bezogen auf die Gesamtmasse der Zusammensetzung enthält.

15. Verwendung nach einem oder mehreren der Ansprüche 1 bis 14, **dadurch gekennzeichnet, dass** die Zusammensetzung zusätzlich Aromen und/oder Süßstoffe enthält.

16. Verwendung nach einem oder mehreren der Ansprüche 1 bis 16, **dadurch gekennzeichnet, dass** 1 - 20 Gew.-% des Wassers durch Ethanol ersetzt werden.

17. Verfahren zur Herstellung einer Zusammensetzung aus Wasser, Stabilisator, Feuchteregulator, Emulgator, Konservierungsstoff und optionalen weiteren Komponenten, **dadurch gekennzeichnet, dass** (a) eine Mischung aus Wasser, Konservierungsstoff und optionalen weiteren Komponenten hergestellt wird, (b) Stabilisator, Feuchteregulator und Emulgator gemischt werden, und (c) die Mischung gemäß (b) unter Rühren in die Mischung gemäß (a) eingetragen wird.

18. Verfahren nach Anspruch 17, **dadurch gekennzeichnet, dass** es zusätzlich ein oder mehrere Farbmittel enthält.

19. Verfahren nach Anspruch 17 oder 18, **dadurch gekennzeichnet, dass** 1 - 20 Gew.-% des Wassers durch Ethanol ersetzt werden.

20. Verfahren zur Herstellung essbarer, bevorzugt dreidimensionaler, Dekorelemente für Lebensmittel, **dadurch gekennzeichnet, dass** eine Zusammensetzung die Wasser, Stabilisator, Feuchteregulator, Emulgator und optionale weitere Komponenten enthält, in Negativformen gefüllt und getrocknet wird.

21. Verfahren zur Herstellung essbarer Dekorelemente für Lebensmittel, **dadurch gekennzeichnet, dass** eine Zusammensetzung die Wasser, Stabilisator, Feuchteregulator, Emulgator und optionale weitere Komponenten enthält, über flache Plastik- oder Metallflächen ausgestrichen und getrocknet wird und die dünne Schicht anschließend in kleine Stücke, Flocken oder Formen zerteilt wird.

22. Essbares Dekorelement für Lebensmittel, erhältlich nach dem Verfahren gemäß einem oder mehreren der Ansprüche 20 oder 21.

23. Dekorelement nach Anspruch 22, **dadurch gekennzeichnet, dass** es sich um ein dreidimensionales Dekorelement handelt.
